Europäisches Patentamt

**European Patent Office**

Office européen des brevets

(11) Numéro de publication: **0 128 834**
**A1**

## (12) DEMANDE DE BREVET EUROPEEN

(21) Numéro de dépôt: **84401183.3**

(51) Int. Cl.³: **G 21 C 7/00**

(22) Date de dépôt: **07.06.84**

(30) Priorité: **09.06.83 FR 8309585**

(43) Date de publication de la demande: **19.12.84**
**Bulletin 84/51**

(84) Etats contractants désignés: **BE DE IT SE**

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Martinez, Jean-Marc, 4, rue Alphonse Pécard, F-91190 Gif sur Yvette (FR)**

(74) Mandataire: **Mongrédien, André et al, c/o BREVATOME 25, rue de Ponthieu, F-75008 Paris (FR)**

(54) **Procédé de pilotage d'un réacteur nucléaire.**

(57) L'invention concerne un procédé de pilotage d'un réacteur nucléaire par déplacement, dans le cœur de ce réacteur, de groupes de barres de commande (4).

Le procédé consiste à élaborer à partir de variables internes du cœur ($\alpha_u$, $\alpha_m$, ...), non commandables, une relation de couplage entre des variables externes commandables telles que la position (h) des groupes de barres de commande ou la concentration (b) de l'agent absorbeur de neutrons et un état ($\varphi$) du réacteur représentatif de la distribution axiale de puissance de ce réacteur.

On effectue le déplacement des groupes de barres de commande en rapport avec les variations des variables externes calculées par un procédé itératif conduisant le réacteur, par petites variations successives, de son état réel ($\varphi$) à un état consigne ($\varphi_c$).

De préférence, on applique une étape supplémentaire de test de réserve de puissance, et on déclenche éventuellement une modification de la concentration de l'agent absorbeur de neutrons soluble dans le circuit primaire du réacteur.

ACTORUM AG

# Procédé de pilotage d'un réacteur nucléaire

L'invention concerne un procédé de pilotage d'un réacteur nucléaire, du type de ceux utilisant un déplacement, dans le coeur de ce réacteur, de groupes de barres de commande et/ou une modification de la concentration d'un agent absorbeur de neutrons soluble dans le circuit primaire de ce réacteur.

Dans les réacteurs nucléaires, tels que les réacteurs nucléaires refroidis par de l'eau sous pression, il est nécessaire de faire varier la puissance fournie par le réacteur, en fonction du programme d'exploitation de ce réacteur auquel est associée une turbine permettant l'entraînement d'un turbo-alternateur pour la production de courant électrique.

De telles variations de la puissance fournie par le réacteur sont obtenues par des variations de réactivité dans le coeur du réacteur, c'est-à-dire dans la zone où sont disposés les assemblages combustibles.

Pour faire varier la réactivité d'un réacteur nucléaire à eau sous pression, on utilise, d'une part des groupes de barres de commande en matériau absorbant les neutrons qu'on peut insérer entre les éléments combustibles dans le coeur du réacteur de façon plus ou moins complète, et d'autre part des moyens permettant de faire varier la concentration d'un agent absorbeur de neutrons généralement du bore, soluble dans le liquide réfrigérant, c'est-à-dire l'eau sous pression.

Pour faire varier la concentration de bore soluble de l'eau sous pression, on introduit dans cette eau soit de l'acide borique soit de l'eau pure. La concentration plus ou moins forte de l'eau sous pression en bore se traduit par une absorption plus ou moins grande des neutrons par le bore en solution.

Dans les réacteurs nucléaires à eau sous pression, les assemblages combustibles sont consti-

B 7949.3 BL

tués par des faisceaux d'éléments combustibles tubulaires renfermant le matériau combustible, chaque assemblage constituant un élément de très grande longueur par rapport à sa section transversale.

Ces assemblages sont disposés côte à côte dans le coeur du réacteur en position verticale.

Les barres de commande sont constituées par des éléments tubulaires de même longueur que les éléments combustibles renfermant un matériau absorbant les neutrons. Ces éléments tubulaires sont reliés entre eux de façon à constituer une grappe mobile dans son ensemble dans la direction verticale à l'intérieur de certains des assemblages constituant le coeur du réacteur. Ces grappes ou barres de commande ne se déplacent cependant pas indépendamment les unes des autres ; elles constituent au contraire des groupes à l'intérieur desquels l'ensemble des barres de commande se déplace de la même façon.

Ces groupes de barres de commande étant insérés dans le coeur du réacteur depuis la partie supérieure de celui-ci, un mouvement vers le bas d'un groupe à donc tendance à diminuer la réactivité du coeur du réacteur alors qu'un mouvement d'un groupe vers le haut a tendance à augmenter cette réactivité.

De même, l'introduction d'acide borique (borication) a tendance à diminuer la réactivité du coeur du réacteur alors qu'une introduction d'eau pure (dilution) a tendance à augmenter cette réactivité.

Le déplacement des groupes de barres de commande et la modification de la concentration de bore permettent donc au système de pilotage d'un réacteur nucléaire, d'assurer les variations de puissance demandées par le réseau électrique.

La liberté de pilotage du réacteur nucléaire est tempérée par l'existence de critères de sûreté qui interdisent certains profils de puissance du coeur du réacteur. Un critère de sûreté important impose notamment un contrôle rigoureux de la distribution axiale de puissance, c'est-à-dire la distribution de la puissance le long de l'axe du coeur du réacteur, qui doit être aussi proche que possible d'une distribution axiale de référence.

Ainsi, le bore mélangé au fluide primaire ayant un effet homogène sur la distribution spatiale de puissance, une variation de la concentration en bore engendre une variation de puissance du réacteur sans perturber le profil axial de puissance de ce réacteur. En ce sens, le bore est intéressant. Cependant, les variations de la concentration en bore étant lentes, le pilotage du coeur du réacteur par le bore seul ne permet pas d'assurer l'ensemble des variations de puissance exigées par la demande de réseau électrique.

Les groupes de barres de commande au contraire, ont une vitesse de déplacement et une efficacité suffisante pour assurer les variations de puissance exigées par la demande du réseau électrique. Mais ces groupes de barres de commande étant insérées dans le coeur à partir du haut du coeur ont un effet inhomogène, et leurs mouvements à l'intérieur du coeur peuvent déformer la distribution axiale de puissance vers des profils non tolérés par les critères de sûreté.

On connaît un procédé de conduite de réacteur nucléaire à eau sous pression où les groupes de barres de commande sont déplacés aussi bien dans un sens que dans l'autre, suivant une séquence prédéterminée. Les mouvements d'insertion ou d'extraction de chacun des groupes de barres de commande utilisés dans le réacteur sont donc déterminés en fonction des mouvements d'insertion ou d'extraction des autres groupes de barres de commande qui les précèdent dans la séquence définie a priori, de manière à maintenir une distribution axiale la moins perturbée possible.

Dans ce procédé de conduite, les barres de commande ne sont déplacées que si un paramètre de conduite représentatif d'un écart entre la puissance demandée à la turbine et la puissance réelle du coeur se trouve à l'extérieur d'un intervalle prédéterminé, appelé bande morte, encadrant la valeur O. D'autre part, la vitesse et le sens de déplacement des groupes de barres de commande sont déterminés uniquement en fonction de la valeur et du signe du paramètre de conduite.

On connaît un procédé de pilotage de réacteur nucléaire dans lequel la puissance du réacteur est réglée par la concentration du bore et dans lequel la distribution axiale de puissance est régulée par un groupe de barres de commande situé dans la demi-pile supérieure du coeur.

Le bore assurant seul la régulation de la puissance, ce procédé de pilotage est adapté aux variations lentes de puissance.

On connaît un autre procédé de pilotage d'un réacteur nucléaire décrit dans le brevet français n° 80 23452 déposé par FRAMATOME. Dans ce procédé, le coeur est découpé en une demi-pile supérieure et une demi-pile inférieure. On mesure la puissance $P_H$ dégagée par la demi-pile supérieure et la puissance $P_B$ dégagée par la demi-pile inférieure. On élabore ainsi un signal de déséquilibre axial (en terminologie anglo-saxonne axial offset) égal à $(P_H - P_B)/(P_H + B_B)$.

Le procédé de pilotage consiste à déplacer les groupes de barres de commande en fonction de la valeur d'un paramètre dépendant de l'écart entre la puissance demandée et la puissance réelle du coeur et en tenant éventuellement compte de la mesure de la déviation axiale égale à la différence entre le déséquilibre axial mesuré et un déséquilibre axial de référence.

Dans ce procédé, les groupes de barres de commande sont commandés par un signal élaboré en fonction de l'écart entre la puissance demandée et la puissance réelle du coeur. La mesure de la déviation axiale intervient également, soit pour commander le déplacement d'un groupe de barres, soit pour bloquer ou débloquer les déplacements de tel ou tel groupe de barres de commande en fonction de sa position dans le coeur.

Ce procédé de pilotage, en ne mesurant que les puissances dégagées par la demi-pile supérieure et la demi-pile inférieure, ne peut contrôler que la puissance du coeur et la déviation axiale. La connaissance de la distribution axiale de puissance du coeur est donc limitée. Ceci peut être considéré comme insuffisant du point de vue de la sécurité, pour des réacteurs de grandes dimensions, tels que des réacteurs à eau pressurisée d'une puissance de 1300 MW par exemple, qui sont du fait de leur dimension plus instables que de plus petits réacteurs.

D'autre part, ce procédé de pilotage qui n'autorise qu'un même sens et qu'une même vitesse de déplacement pour tous les groupes de barres de commande, ne permet pas une réelle coordination entre ces groupes de barres pour piloter un niveau de puissance et contrôler la déviation axiale. En effet, dans le cas où le niveau de puissance est correct et si un contrôle de la déviation axiale est nécessaire, il est préférable de déplacer au moins deux groupes de barres de commande simultanément et en sens inverse pour ne pas modifier la réactivité du coeur, ce qui évite les fluctuations autour de la puissance demandée.

De plus, dans ce procédé de pilotage, la commande du bore n'est pas définie automatiquement.

L'invention a pour objet une amélioration importante de ce procédé de pilotage. D'une part, la distribution axiale de puissance du coeur du réacteur est mieux connue grâce à la mesure de cette puissance en N points de l'axe du réacteur, le nombre N étant supérieur à 2. D'autre part, le procédé de pilotage selon l'invention vise à réguler la puissance du coeur, la première harmonique de la puissance (déviation axiale), mais aussi les harmoniques suivantes (sur lesquelles nous reviendrons par la suite). Enfin, le procédé de pilotage de l'invention est souple en ce sens que chaque groupe de barres de commande peut avoir un déplacement propre.

De manière plus précise, l'invention a pour objet un procédé de pilotage d'un réacteur nucléaire du type de ceux utilisant un déplacement, dans le coeur de ce réacteur, de groupes de barres de commande et/ou une modification de la concentration d'un agent absorbeur de neutrons soluble dans le circuit primaire dudit réacteur, pour conduire le réacteur d'un état $\emptyset$, exprimant la puissance et la distribution axiale de puissance de ce réacteur, le plus près possible d'un état consigne $\emptyset_c$, exprimant une puissance à fournir et une distribution axiale de puissance à suivre, un état du réacteur dépendant de variables internes non commandables et de variables externes commandables, ces variables externes comprenant la position de chaque groupe de barres de commande dans le coeur du réacteur et la concentration de l'agent absorbeur de neutrons, ledit procédé de pilotage dans lequel un état $\emptyset$ du

B 7949.3 BL

réacteur est défini par un nombre entier N de mesures $\emptyset_1, ..., \emptyset_N$ représentant respectivement le flux neutronique en N points $Z_1, Z_2, ..., Z_N$ de l'axe du réacteur consistant à calculer les amplitudes de Nl modes $\psi_1, \psi_2, ..., \psi_{Nl}$, fondamental et harmoniques, de la distribution axiale $\psi$ de puissance ou de flux du réacteur, calculer les amplitudes de Nl modes, fondamental et harmoniques, de la distribution axiale $\psi_c$ de puissance ou de flux, de consigne, déterminer les variations optimales des variables externes pour rapprocher les amplitudes mesurées des Nl modes des amplitudes de consigne de ces Nl modes, commander le déplacement des groupes de barres en rapport avec lesdites variations des variables externes.

De préférence, ledit calcul comporte les opérations suivantes :

- détermination, pour amener le réacteur d'un état $\emptyset$ à un état aussi proche que possible de l'état $\emptyset_c$, d'une variation des variables externes, cette variation étant obtenue par un procédé itératif qui est répété tant qu'une variation des variables externes est possible de la manière suivante : élaboration, en fonction des variables internes, d'une relation de couplage R entre les variables externes et l'état $\emptyset$ du réacteur, élaboration, à partir de la relation de couplage, d'une relation linéaire entre des petites variations des variables externes et une petite variation de l'état du réacteur, cette relation étant valable pour des variations inférieures à un niveau prédéterminé, calcul des variations optimales des variables externes pour se rapprocher de l'état $\emptyset_c$, ces variations étant inférieures au niveau prédéterminé, calcul du nouvel état $\emptyset$ du réacteur en fonction des nouvelles valeurs des variables externes ;

- calcul de la somme des variations des variables externes.

Selon une autre caractéristique secondaire, le procédé selon l'invention, dans la détermination des variations optimales des variables externes pour rapprocher les amplitudes mesurées des N1 modes, des amplitudes de consigne de ces N1 modes, respecte les priorités suivantes : fourniture de la puissance demandée, régulation du deuxième mode $\Psi_2$ à puissance constante, régulation du troisième mode $\Psi_3$ à puissance et à deuxième mode constants, ..., régulation du $N1^{ième}$ mode $\Psi_{N1}$ à puissance, deuxième mode, ..., $N1-1^{ième}$ mode constants.

Selon une autre caractéristique secondaire du procédé de pilotage de l'invention, lorsque la puissance du réacteur est inférieure à la puissance nominale, on maintient la position d'insertion des groupes de barres de commande à un niveau tel que leur extraction permette un retour du réacteur à la puissance nominale.

D'autres caractéristiques et avantages de l'invention ressortiront de la description qui va suivre en référence aux figures annexées donnée à titre indicatif et non limitatif, sur lesquelles :

- la figure 1 est une représentation schématique du coeur d'un réacteur nucléaire illustrant le principe du procédé de pilotage selon l'invention,

- la figure 2 est un organigramme simplifié du procédé de pilotage selon l'invention,

- la figure 3 est un autre organigramme simplifié décrivant le procédé de pilotage selon l'invention,

- la figure 4 est un schéma fonctionnel illustrant le contrôle du coeur au moyen du procédé de pilotage de l'invention.

Le procédé de pilotage de l'invention consiste à traiter l'information sur la distribution axiale de puissance et sur la position des groupes de barres de commande dans le coeur en vue de déterminer des positions de consigne sur les groupes de barres de commande pour réguler la puissance du coeur et autant d'harmoniques de la distribution axiale de puissance qu'il sera possible. (Dans la suite, la puissance moyenne et les harmoniques de la distribution axiale de puissance seront désignées par le terme "modes". A cet effet, ce procédé peut utiliser le calculateur associé à la centrale nucléaire concernée.

Pour avoir une bonne connaissance de la distribution axiale de puissance du coeur, il faut connaître la puissance en plusieurs points de l'axe de ce coeur. En fait, cette puissance n'est pas mesurée directement mais est déduite, de manière connue, de la mesure de la distribution axiale du flux neutronique. Cette mesure peut être faite de manière connue par des chambres externes ; elle peut également être réalisée par thermométrie gamma.

Ainsi, pour le système de pilotage d'un réacteur nucléaire, contrôler la distribution axiale de puissance, donc contrôler en particulier la puissance et la déviation axiale de puissance du coeur est identique à contrôler la distribution axiale du flux neutronique.

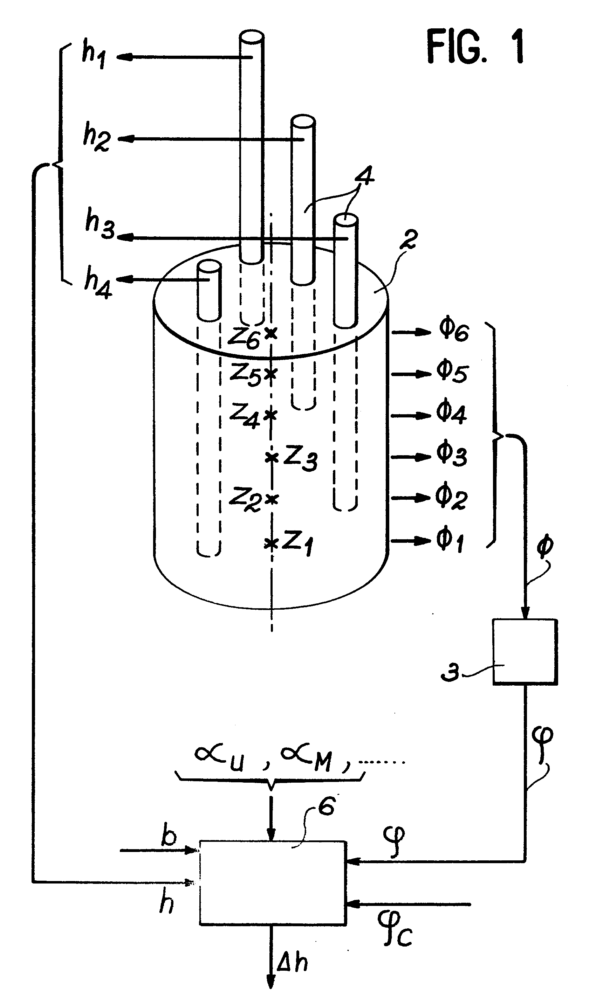

On a représenté sur la figure 1 un schéma illustrant le procédé de pilotage de l'invention. Le flux neutronique axial est mesuré en N points $z_1$, $z_2$, ..., $z_N$ de l'axe du coeur (N=6 sur la figure ). On note $\emptyset_1$, $\emptyset_2$, ..., $\emptyset_6$ les flux neutroniques mesurés respectivement aux points $z_1$, $z_2$, ..., $z_6$ et $\emptyset$ le vecteur flux de composantes $\emptyset_1$, $\emptyset_2$, ..., $\emptyset_6$.

. On a vu qu'on utilise aussi pour décrire la distribution axiale de puissance d'un réacteur la no-

tion de vecteur modal $\Psi$, de composantes $\Psi_1$, ..., $\Psi_{N1}$, $\Psi_1$ étant le fondamental, $\Psi_2$ à $\Psi_{N1}$ étant les harmoniques de la distribution axiale de puissance. On connaît la relation simple qui relie le vecteur modal $\Psi$ et le vecteur flux $\emptyset$, La représentation modale est intéressante en ce que les composantes du vecteur modal $\Psi$ expriment la distribution axiale. Ainsi, la deuxième composante $\Psi_2$ est équivalente au déséquilibre axial, les composantes d'indices supérieurs étant équivalents aux déséquilibres d'ordres supérieurs. Dans sa disposition principale, le procédé de pilotage de l'invention consiste donc à fournir la puissance demandée, qui est pratiquement la première composante (fondamental) du vecteur modal $\Psi$, et à réguler les modes $\Psi_2$, $\Psi_3$, ..., $\Psi_{N1}$ pour les rapprocher au mieux des modes correspondants de la distribution de consigne $\Psi_c$.

De préférence, cette régulation est effectuée de manière séquentielle, chaque mode étant régulé en maintenant constants la puissance et les modes déjà régulés.

Le pilotage du réacteur nucléaire consiste donc à amener le réacteur de l'état défini par le vecteur flux $\emptyset$ (que nous abrégerons dans la suite par état $\emptyset$) à un état aussi proche que possible d'un état consigne $\emptyset_c$ exprimant la puissance et la déviation axiale demandées. En termes de modes, le pilotage consiste à passer de la distribution axiale $\Psi$ à une distribution axiale $\Psi_c$. Ce changement d'état peut être obtenu par modification de variables internes, c'est-à-dire non commandables par le système de pilotage, ou externes, c'est-à-dire commandables par le système de pilotage.

Diverses modifications internes apparaissent au cours du fonctionnement du réacteur et pertur-

B 7949.3 BL

bent sa réactivité. Premièrement, l'épuisement du combustible, en diminuant la densité des noyaux fissiles, engendre une diminution lente de réactivité de l'ordre de − 35 pcm pour un réacteur à eau pressurisée fonctionnant à puissance nominale sur 24 heures.

Deuxièmement, une élévation de la puissance engendre une augmentation de la température de combustible, ce qui entraîne aussi une diminution de la réactivité. Cet effet, appelé effet Doppler, joue un rôle stabilisant. A la puissance nominale du réacteur, la baisse de réactivité est de l'ordre de −3 pcm/°C. Une variation de température entraîne d'autre part une variation de densité de l'eau du circuit primaire utilisée comme modérateur des réacteurs à eau pressurisée. Le coefficient modérateur $\alpha_M$ dépend de la concentration en bore. Il a un effet stabilisant pour une concentration en bore inférieure à 1400 ppm.

Troisièmement, des fragments issus des fissions peuvent intervenir dans des chaînes radioactives et, par capture de neutrons, contribuer au bilan de la réactivité. Dans les réacteurs à neutrons thermiques, l'isotope 135 du Xénon est un important capteur de neutrons thermiques. S'agissant d'un corps très absorbant, l'effet du Xénon est déstabilisant et peut conduire à des oscillations spatiales de puissance. Ces oscillations peuvent amener des pics de puissance incompatibles avec les normes de sûreté. La mesure de la puissance axiale du coeur du réacteur en plusieurs points, permet de mieux contrôler ces oscillations spatiales de puissance.

Les modifications externes de la réactivité sont celles permettant de piloter le coeur. Les variables utilisées sont les profondeurs d'insertions $h_1$, ..., $h_p$ (p=4 sur la figure) des groupes de barres de commande et la concentration b en bore. L'ensemble des positions des groupes de barres de commande est représenté par un vecteur h de composantes $h_1$, ..., $h_4$.

On a représenté par un moyen 6 l'action du procédé de pilotage de l'invention. Ce moyen 6 reçoit d'une part le vecteur modal $\Psi$ déduit de l'état $\emptyset$ du réacteur par le moyen 3 et d'autre part le vecteur modal $\Psi_C$ correspondant à l'état consigne $\emptyset_C$ dans le- quel on désire amener le réacteur. Il reçoit également la valeur des variables internes affectant le niveau de réactivité parmi lesquels on peut citer : le coef- ficient Doppler $\alpha_u$, le coefficient modérateur $\alpha_M$, ou autre. Il convient de noter que l'utilisation du procédé de pilotage selon l'invention, dans la mesure où le calcul qu'il implique nécessite un temps négligeable devant la dynamique du Xénon, permet de ne pas prendre en compte les variations du Xénon sur toute période de calcul. Par ailleurs, le moyen 6 reçoit les variables externes : niveau h d'insertion de chacun des groupes de barres de commande et concentration en bore b.

Une relation de couplage, dépendant de la valeur des variables internes, est élaborée entre l'état $\emptyset$, la variable h et la concentration en bore b.

A l'aide de ce modèle de couplage, le moyen 6 élabore des signaux permettant d'effectuer une modi- fication $\Delta h$ de la profondeur d'insertion de chacun des groupes de barres de commande.

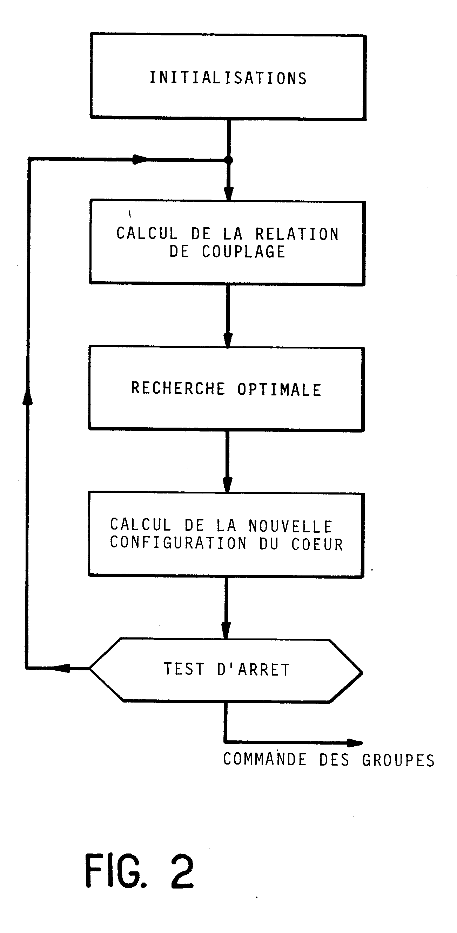

Le procédé de pilotage de réacteur nucléaire selon l'invention symbolisé, par le moyen 6 de la figure 1, va maintenant être décrit plus en détail en référence à l'organigramme de la figure 2.

Le procédé de pilotage consiste à amener le réacteur de son état réel $\emptyset$ (de vecteur modal $\Psi$) à un état consigne $\emptyset_C$ (de vecteur modal $\Psi_C$). Pour cela, le procédé va élaborer une relation de couplage R entre

le flux neutronique $\emptyset$ mesuré d'une part, et la position h des groupes de barres de commande et la concentration b en bore d'autre part. Cette relation R dépend de la valeur des paramètres internes tels que le coefficient Doppler $\alpha_u$, le coefficient modérateur $\alpha_M$, l'efficacité $\alpha_{Hi}$ des groupes d'ordre i de barres commande ou autres. Cette relation dépend également de constantes telles que la hauteur H du coeur du réacteur et les ordonnées $z_1$, $z_2$, ..., $z_N$ des points de l'axe du réacteur où sont mesurés les flux neutroniques $\emptyset_1$, $\emptyset_2$, ..., $\emptyset_N$. Cette relation R est complexe et n'est en général pas linéaire. Elle ne permet donc pas d'obtenir directement la position h à donner aux groupes de barres de commande et éventuellement la concentration b en bore pour que le réacteur se trouve dans l'état $\emptyset_c$. Cependant, comme toute relation non linéaire, cette relation R peut être approximée par une relation linéaire valable pour des valeurs h, $\emptyset$ et b, situées dans des bandes de valeur de largeurs limitées centrées sur les valeurs réelles.

Le procédé de pilotage va donc consister à calculer les déplacements nécessaires pour passer de l'état $\emptyset$ à l'état $\emptyset_c$ en effectuant par itération des mouvements $\delta$h de valeur limitée à la demi largeur de leur bande de valeur dans laquelle la relation de couplage R est considérée linéaire. Après chaque itération conduisant à un déplacement d'un groupe de barres de commande, la relation de couplage est recalculée. Ce procédé est illustré par l'organigramme de la figure 2.

La première étape de l'organigramme réalise une initialisation des valeurs nécessaires au calcul de la relation de couplage R. Les variables initialisées sont les variables internes telles que le coefficient Doppler $\alpha_u$, le coefficient modérateur $\alpha_m$, l'ef-

ficacité $\alpha_{Hi}$ des groupes d'ordre i de barres de commande. D'autres valeurs constantes nécessaires au calcul de couplage sont également initialisées. Cette initialisation étant réalisée, le procédé de pilotage va procéder à une itération des déplacements des groupes de barres de manière à faire passer le réacteur de l'état $\emptyset$, de vecteur modal $\Psi$, à l'état $\emptyset_c$, de vecteur modal $\Psi_c$.

La première étape de cette itération consiste à calculer la relation de couplage R reliant l'état $\emptyset$ à la position h des groupes de barres de commande et éventuellement à la concentration b en bore car, en toute rigueur, il faut tenir compte de la concentration en bore pour déterminer le coefficient modérateur $\alpha_M$ qui dépend de cette dernière. Cette relation R dépend des paramètres internes du coeur et des constantes initialisées.

La deuxième étape de la boucle d'itération consiste à rechercher les valeurs $\delta h^*$ optimales permettant de se rapprocher de l'état $\emptyset_c$. Cette recherche est optimale en ce sens qu'elle doit tenir compte de contraintes telles qu'une valeur maximale de $\delta h$ pour préserver la validité de l'approximation linéaire de la relation de couplage R.

Des valeurs $\delta h^*$ ayant été calculées, l'étape suivante consiste à calculer la nouvelle configuration du coeur, c'est-à-dire à calculer la nouvelle position $h + \delta h^*$ des groupes de barres de commande et la nouvelle valeur $\emptyset + \delta \emptyset$ du vecteur de flux à l'aide de la relation de couplage R. Le déplacement $\delta h^*$ est mémorisé mais pas effectué réellement. La commande du déplacement réel des groupes de barres de commande est effectuée à la fin de toutes les itérations.

Passé ce premier calcul, une nouvelle itération est entreprise qui nécessite un nouveau calcul de la relation de couplage R, les valeurs h et $\emptyset$ ayant été modifiées. Le procédé de pilotage itératif est arrêté lorsqu'il y a saturation de l'ensemble des contraintes sur la position des groupes de barres de commande. La nouvelle configuration du coeur obtenue après la dernière itération permet de calculer la valeur $\Delta h$ de déplacement des groupes de barres de commande (c'est la somme des déplacements $\delta h^*$ calculés à chaque itération) et de commander le déplacement des groupes de barres de commande.

Le bore a une action lente sur la modification de la puissance axiale du coeur. Les groupes de barres de commande sont donc utilisés préférentiellement pour piloter le réacteur. Cependant, le bore a une utilité pour maintenir une réserve de puissance suffisante.

En effet, quelle que soit la puissance délivrée par le réacteur, on doit pouvoir en toutes circonstances retourner rapidement à la puissance nominale. Si, donc le coeur délivre une puissance par exemple de l'ordre de 50% de la puissance nominale, alors que tous les groupes de barres de commande sont hors du coeur, il n'est plus possible d'augmenter rapidement la puissance du réacteur en sortant du coeur certains groupes de barres de commande.

Pour ne pas se trouver dans cette situation, on impose en général au système de pilotage de maintenir des groupes de barres suffisamment insérées dans le coeur, de sorte que leur extraction totale permette le retour à la puissance nominale du réacteur.

Dans certaines situations, il n'est donc plus possible au système de pilotage de commander l'extraction des groupes de barres de commande. Le pilotage du réacteur s'effectue alors par modification de la concentration en bore. On utilise la relation de couplage R pour déterminer la réserve en puissance ; dans le cas où cette réserve est insuffisante, l'ordre de dilution est donné.

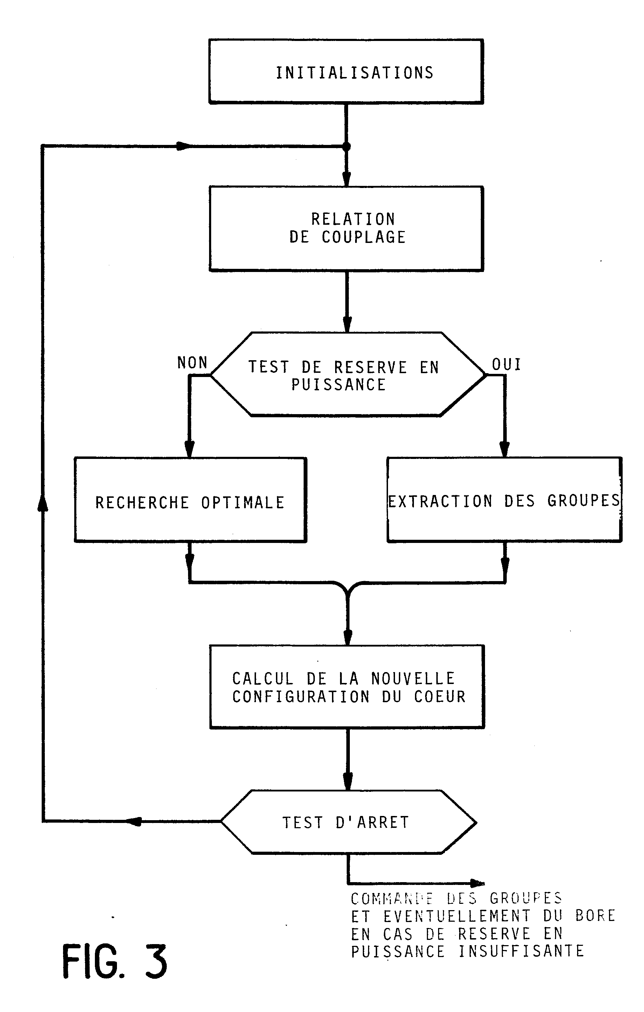

On a représenté sur la figure 3 un organigramme simplifié d'un procédé de pilotage selon l'invention qui permet de contrôler la réserve de puissance du réacteur. Cet organigramme comprend des étapes identiques à l'organigramme décrit à la figure 2. Nous ne reviendrons pas sur les étapes communes à ces deux organigrammes.

L'organigramme de la figure 3 comprend en plus, après établissement de la relation de couplage, une étape de test. Dans le cas où l'on ne désire pas tester la réserve en puissance, le procédé de pilotage dont l'organigramme est représenté sur la figure 3, se déroule de la même manière que le procédé de pilotage dont l'organigramme est représenté sur la figure 2. Dans le cas où l'on désire tester la réserve en puissance, l'étape de recherche optimale est précédée par une étape d'extraction des groupes de barres de commande.

Dans cet état, à chaque itération, la variation $\delta h$ de la position des groupes est imposée à la valeur d'extraction maximale possible sous les contraintes. Lorsqu'après un certain nombre d'itérations tous les groupes de barres de commande sont extraits, il suffit de regarder la configuration du coeur correspondante pour savoir si le retour du réacteur de la puissance actuelle à la puissance nominale est possible. Selon le résultat de ce test de réserve en puissance, le procédé de pilotage peut remplacer un déplacement d'un groupe de barres de commande par une modification de la concentration en bore de manière à conserver toujours une réserve de puissance (par extraction des groupes de barres de commande) permettant d'atteindre rapidement la puissance nominale.

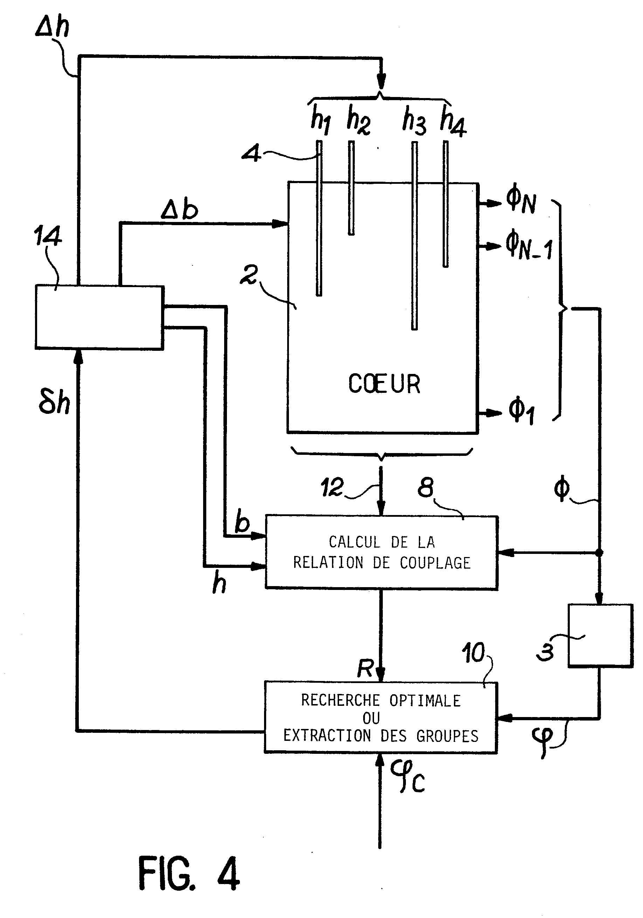

On a représenté sur la figure 4, un schéma fonctionnel illustrant le contrôle du coeur d'un réacteur au moyen du procédé de pilotage de l'invention. Le pilotage du réacteur de son état $\emptyset$ vers l'état $\emptyset_C$ est réalisé de la manière suivante.

A un instant donné, le flux neutronique $\emptyset$ de composantes $\emptyset_1$, ..., $\emptyset_N$ mesurées en N points de l'axe du réacteur est mesuré et appliqué sur une entrée d'un moyen 8 de calcul d'un modèle de couplage. Ce moyen 8 reçoit par ailleurs les valeurs des variables externes h, de composantes $h_1$, $h_2$, $h_3$ et $h_4$, représentant la profondeur d'insertion de chacun des quatre groupes de barres de commande représentés sur la figure et b représentant la concentration en bore. Les connaissances de l'état $\emptyset$, de la position h des groupes de barres, et de la concentration b en bore jointes à la détermination des variables internes (représentée par la liaison 12) tels que $\alpha_u$, $\alpha_M$, $\alpha_{Hi}$, etc..., permet d'effectuer le calcul d'un modèle de couplage R entre $\emptyset$, h, et b. Ce modèle est fourni à un moyen 10 qui détermine en fonction de la différence entre le vecteur modal $\Psi_C$ correspondant à l'état $\emptyset_C$ que l'on désire atteindre et le vecteur modal $\Psi$ délivré par le moyen 3 et correspondant à l'état $\emptyset$ actuel, la variation optimale $\Delta h$ de profondeur d'insertion des groupes de barres de commande à réaliser.

Ces variations optimales $\Delta h$ sont calculées de manière itérative par sommation sur de petites variations $\delta h$. A chaque itération, les valeurs optimales $\delta h$ sont mémorisées dans un moyen 14. Elles permettent de déterminer la variation d'état $\delta \emptyset$ correspondante.

Ce procédé de calcul de variation de position $\delta h$ d'un groupe de barres de commande permet d'approcher au mieux l'état $\emptyset_C$ par une succession de va-

riations $\delta\phi$ de l'état du réacteur. Lorsqu'aucun mouvement des groupes ne permet de s'approcher davantage de l'état $\phi_c$, le moyen 14 calcule la somme $\Delta h$ des déplacements $\delta h$ des groupes de barres de commande afin de commander ce déplacement, et détermine éventuellement l'ordre d'injection ou de dilution du bore en fonction de la réserve en puissance et/ou pour maintenir le contrôle de la distribution axiale de puissance par les groupes.

Comme cela a été précisé au début, le mode de réalisation préféré de l'invention régule de façon séquentielle les modes successifs de la distribution axiale de puissance pour les rapprocher au mieux de la distribution axiale de consigne, chaque mode étant régulé en maintenant constants les modes déjà régulés.

Toutefois, l'invention englobe des réalisations où l'on définit globalement toutes les composantes du vecteur modal grâce à une comparaison en bloc avec les composantes du vecteur modal de consigne.

## REVENDICATIONS

1. Procédé de pilotage d'un réacteur nucléaire du type de ceux utilisant un déplacement, dans le coeur de ce réacteur, de groupes de barres de commande et/ou une modification de la concentration d'un agent absorbeur de neutrons soluble dans le circuit primaire dudit réacteur, pour conduire le réacteur d'un état $\emptyset$, exprimant la puissance et la distribution axiale de puissance de ce réacteur, le plus près possible d'un état consigne $\emptyset_c$, exprimant une puissance à fournir et une distribution axiale de puissance à suivre, un état du réacteur dépendant de variables internes non commandables et de variables externes commandables, ces variables externes comprenant la position de chaque groupe de barres de commande dans le coeur du réacteur et la concentration de l'agent absorbeur de neutrons, ledit procédé de pilotage étant caractérisé en ce qu'un état $\emptyset$ du réacteur est défini par un nombre entier N de mesures $\emptyset_1$, ..., $\emptyset_N$ représentant respectivement le flux neutronique en N points $z_1$, $z_2$, ..., $z_N$ de l'axe du réacteur, en ce qu'on calcule les amplitudes de Nl modes $\Psi_1$,... $\Psi_{Nl}$, fondamental et harmoniques, de la distribution axiale $\Psi$ de puissance ou de flux du réacteur, en ce qu'on calcule les amplitudes de Nl modes, fondamental et harmoniques, de la distribution axiale $\Psi_c$, de puissance ou de flux, de consigne, en ce qu'on détermine les variations optimales des variables externes pour rapprocher les amplitudes mesurées des Nl modes des amplitudes de consigne de ces Nl modes, et en ce qu'on commande le déplacement des groupes de barres pour qu'elles se trouvent dans les positions calculées.

2. Procédé selon la revendication 1, caractérisé en ce que ledit calcul comporte les opérations suivantes :

0128834

- détermination, pour amener le réacteur d'un état $\emptyset$ à un état aussi proche que possible de l'état $\emptyset_C$, d'une variation des variables externes, cette variation étant obtenue par un procédé itératif qui est répété tant qu'une variation des variables externes est possible de la manière suivante :

      - élaboration, en fonction des variables internes, d'une relation de couplage R entre les variables externes et l'état $\emptyset$ du réacteur,

      - élaboration, à partir de la relation de couplage, d'une relation linéaire entre des petites variations des variables externes et une petite variation de l'état du réacteur, cette relation étant valable pour des variations inférieures à un niveau prédéterminé,

      - calcul des variations optimales des variables externes pour se rapprocher de l'état $\emptyset_C$, ces variations étant inférieures au niveau prédéterminé,

      - calcul du nouvel état $\emptyset$ du réacteur en fonction des nouvelles valeurs des variables externes,

- calcul de la somme des variations des variables externes.

      3. Procédé selon la revendication 1, caractérisé en ce que dans la détermination des variations optimales des variables externes pour rapprocher les amplitudes mesurées des N1 modes, des amplitudes de consigne de ces N1 modes, le procédé respecte les priorités suivantes : fourniture de la puissance demandée, régulation du deuxième mode $\psi_2$ à puissance constante, régulation du troisième mode $\psi_3$ à puissance et à deuxième mode constants, ..., régulation du N1$^{ième}$ mode $\psi_{N1}$ à puissance, deuxième mode, ..., N1-1$^{ième}$ mode constants.

4. Procédé selon l'une quelconque des revendications 1 à 3, caractérisé en ce que lorsque la puissance du réacteur est inférieure à la puissance nominale, on maintient la position d'insertion des groupes de barres de commande à un niveau tel que leur extraction permette un retour du réacteur à la puissance nominale.

5. Procédé selon la revendication 4, caractérisé en ce que, pour s'assurer de la possibilité de retour du réacteur à la puissance nominale, on procède à un test de réserve de puissance, en simulant le déplacement des groupes de barres de commande.

6. Procédé selon la revendication 4, caractérisé en ce que, pour maintenir le cas échéant la position d'insertion du groupe de barres de commande à un niveau tel que leur extraction permette un retour du réacteur à la puissance nominale, on procède à des modifications de la concentration de l'agent absorbeur de neutrons.

0128834

FIG. 1

INITIALISATIONS

CALCUL DE LA RELATION
DE COUPLAGE

RECHERCHE OPTIMALE

CALCUL DE LA NOUVELLE
CONFIGURATION DU COEUR

TEST D'ARRET

COMMANDE DES GROUPES

FIG. 2

```
                    ┌─────────────────────────┐
                    │      INITIALISATIONS     │
                    └─────────────────────────┘
                                │
        ┌───────────────────────┤
        │                       │
        │           ┌─────────────────────────┐
        │           │         RELATION        │
        │           │       DE COUPLAGE       │
        │           └─────────────────────────┘
        │                       │
        │              ╱─────────────────────╲
        │      NON    │   TEST DE RESERVE EN   │   OUI
        │    ◄────────┤       PUISSANCE        ├────────►
        │              ╲─────────────────────╱
        │          │                             │
        │  ┌─────────────────────┐   ┌─────────────────────────┐
        │  │  RECHERCHE OPTIMALE │   │  EXTRACTION DES GROUPES  │
        │  └─────────────────────┘   └─────────────────────────┘
        │          │                             │
        │          └──────────────┬──────────────┘
        │                         │
        │           ┌─────────────────────────┐
        │           │  CALCUL DE LA NOUVELLE   │
        │           │  CONFIGURATION DU COEUR  │
        │           └─────────────────────────┘
        │                         │
        │              ╱─────────────────────╲
        └─────────────┤      TEST D'ARRET      │
                       ╲─────────────────────╱
                                 │
                                 └────────────►
```

COMMANDE DES GROUPES
ET EVENTUELLEMENT DU BORE
EN CAS DE RESERVE EN
PUISSANCE INSUFFISANTE

# FIG. 3

FIG. 4

**Office européen des brevets**

0128834

Numéro de la demande

EP 84 40 1183

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A,D | EP-A-0 051 542 (FRAMATOME) * Revendications * | 1,4,6 | G 21 C 7/00 |
| | --- | | |
| A | EP-A-0 010 036 (FRAMATOME) * Revendications * | 1,6 | |
| | --- | | |
| A | FR-A-2 395 572 (FRAMATOME) * Revendications * | 1,6 | |
| | --- | | |
| A | GB-A-1 244 965 (B.N.D.C.L.) * Figures * | 1 | |
| | ----- | | |

**DOMAINES TECHNIQUES RECHERCHES (Int. Cl. 3)**

G 21 C 7/00

Le présent rapport de recherche a été établi pour toutes les revendications

| Lieu de la recherche | Date d'achèvement de la recherche | Examinateur |
|---|---|---|
| LA HAYE | 10-09-1984 | KAVCIC D. |